(19)

**Europäisches Patentamt**

**European Patent Office**

**Office européen des brevets**

(11) **EP 4 672 636 A1**

(12) **EUROPEAN PATENT APPLICATION**

(43) Date of publication:
**31.12.2025 Bulletin 2026/01**

(21) Application number: **24382700.3**

(22) Date of filing: **28.06.2024**

(51) International Patent Classification (IPC):
**H04B 10/073** (2013.01)

(52) Cooperative Patent Classification (CPC):
**H04B 10/073**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Safran Electronics & Defense Spain
Sociedad
Limitada
18014 Granada (ES)**

(72) Inventors:
• **DIAZ ALONSO, Javier
77550 MOISSY-CRAMAYEL (FR)**
• **ROS VIDAL, Eduardo
77550 MOISSY-CRAMAYEL (FR)**
• **LOPEZ JIMENEZ, José
77550 MOISSY-CRAMAYEL (FR)**
• **SOHN, David
77550 MOISSY-CRAMAYEL (FR)**
• **RAT, Benoit
77550 MOISSY-CRAMAYEL (FR)**

(74) Representative: **Isern Patentes y Marcas S.L.
Avda. Diagonal, 463 Bis, 2°
08036 Barcelona (ES)**

(54) **NETWORKED SYSTEM AND ASSOCIATED CALIBRATION PROCESS**

(57) Networked system having at least a first device, a second device and a fiber-optic connection for connecting the first device to the second device, the fiber-optic connection having at least a first fiber-optic sub-connection (103), for signals transmission only from the first device to the second device, and at least a second fiber-optic sub-connection (104), for signals transmission only from the second device to the first device, wherein in a first configuration of the system, signals are transmitted by the first fiber-optic sub-connection at a first wavelength and signals are transmitted by the second fiber-optic sub-connection at a second wavelength, and in a second configuration of the system, signals are transmitted by the first fiber-optic sub-connection at the second wavelength and signals are transmitted by the second fiber-optic sub-connection at the first wavelength.

Associated calibration process.

Fig. 3

EP 4 672 636 A1

**Description**

The present invention relates to a networked system.

The present invention also relates to a calibration process associated to this networked system.

BACKGROUND OF THE INVENTION

Time transfer technics between a transmitter and a receiver permit to synchronize said transmitter and said receiver. However, some time transfer technics assume the propagation delay from transmitter to receiver, and the reverse, are the same (symmetrical).

But more often these delays are different thus causing asymmetry and generating a phase offset during time transfer protocol. For example, a source of asymmetry is present when using duplex fiber-optic cables and fiber lengths are different for the pair of fibers. This is especially apparent over long distance links between a transmitter and a receiver.

It is then necessary to take into account that the propagation delay from transmitter to receiver, and the reverse, could not be necessary the same.

It is known from prior art the "White Rabbit project". This project was developed in order to create a "White Rabbit" network which could be used to provide better timing and synchronization. In particular the White Rabbit project takes into account the fact that a propagation delay from transmitter to receiver, and the reverse, are not necessarily the same.

A White Rabbit network uses a Precision Time Protocol to achieve sub-nanosecond accuracy. A two-way exchange of the Precision Time Protocol synchronization messages allows precise adjustment of clock phase and offset. The link delay between transmitter and receiver is known precisely via accurate hardware timestamps and the calculation of delay asymmetry.

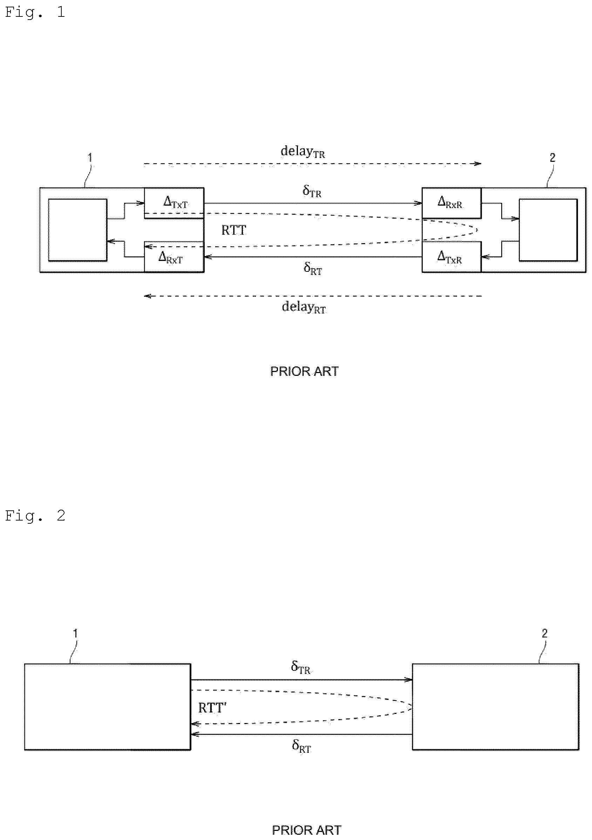

Figure 1 shows an example of a White Rabbit network when fiber-optic cables connect two devices which are called thereinafter the transmitter 1 and the receiver 2.

With said model, round-trip time (RTT) between transmitter 1 and receiver 2 is defined by:

$$RTT = delay_{TR} + delay_{RT} \quad (1)$$

with

$delay_{TR}$ the forward path delay from the transmitter 1 to the receiver 2, and
$delay_{RT}$ the reverse path delay from the receiver 2 to the transmitter 1.

Each of the path delays in (1) is made up of:

- known components due to hardware of the transmitter 1 and receiver 2 (with the known transmission and reception delays of the transmitter 1 - $\Delta_{TxT}, \Delta_{RxT}$ - and the known transmission and reception delays of the receiver 2 - $\Delta_{RxR}, \Delta_{TxR}$), and
- unknown components due to the fiber-optic path i.e. fiber propagation delay from the transmitter 1 to the receiver 2 $\delta_{TR}$ and fiber propagation delay from the receiver 2 to the transmitter 1 $\delta_{RT}$.

This can be translated into the following equations (2) and (3):

$$delay_{TR} = \Delta_{TxT} + \delta_{TR} + \Delta_{RxR} \quad (2)$$

$$delay_{RT} = \Delta_{TxR} + \delta_{RT} + \Delta_{RxT} \quad (3)$$

The values for the known components ($\Delta_{TxT}, \Delta_{RXR}, \Delta_{TxR}, \Delta_{RxT}$) are determined using well-known techniques and/or are provided by the manufacturer of said elements.

Thus, the unknown components can be isolated to just show the "fiber-optic" Round Trip Time (RTT') as in (4) and depicted in figure 2:

$$RTT' = \delta_{TR} + \delta_{RT} \quad (4)$$

A relative delay coefficient $\alpha$ between the fiber-optic delays ($\delta_{TR}, \delta_{RT}$) could be defined by:

$$\alpha = \frac{\delta_{TR}}{\delta_{RT}} - 1 \quad (5)$$

A calibration of the transmitter 1 and/or the receiver 2 could be implemented based on this relative delay coefficient in order to take into account a possibly asymmetry in the network.

However, it turns out that this coefficient is difficult to estimate.

OBJECT OF THE INVENTION

An aim of the invention is to propose a solution that permits to estimate more easily a possible asymmetry in a network system.

SUMMARY OF THE INVENTION

In view of achieving at least partly this aim, it is proposed a networked system having at least a first device, a second device and a fiber-optic connection for connecting the first device to the second device, the fiber-optic connection having at least a first fiber-optic sub-connection, for signals transmission only from the first device to the second device, and at least a second fiber-optic sub-connection, for signals transmission only from the second device to the first device.

According to the invention, in a first configuration of the system, signals are transmitted by the first fiber-optic sub-connection at a first wavelength and signals are transmitted by the second fiber-optic sub-connection at a second wavelength, and in a second configuration of the system, signals are transmitted by the first fiber-optic sub-connection at the second wavelength and signals are transmitted by the second fiber-optic sub-connection at the first wavelength.

Therefore, by using different wavelengths for the forward and reverse directions and by being able to have two different configurations with different wavelengths between the forward and reverse directions, it is possible to determine the differences in fiber-optic length in the forward and reverse direction.

Besides the invention takes advantage of asymmetry changes from the wavelength dispersion effect.

Advantageously, a single operator can perform a calibration process of the first device and/or second device based on this particular networked system.

Moreover, the operator could perform a calibration process of the first device and/or second device meantime being remotely located to the first device or second device.

In addition, or alternatively, a calibration process of the first device and/or second device could be automated based on this particular networked system.

Optionally, the system comprises at least one first switching module associated to the first device and at least one second switching module associated to the second device, so that in the first configuration of the system, first and second switching devices are in a first state, and in a second configuration of the system, first and second switching devices are in a second state different from the first state.

Optionally, at least one of the first switching module and second switching module is a Tunable Wavelength module. Optionally, at least one of the first switching module and second switching module is an optical switch.

Optionally, the first fiber-optic sub-connection is connected to the first device through a first port of a first optical switch and is connected to the second device through a first port of a second optical switch and wherein the second fiber-optic sub-connection is connected to the first device through a second port of the first optical switch and is connected to the second device through the second port of the second optical switch.

Optionally, first device comprises two elements that run in parallel and the second device comprise two elements that run in parallel so that:

- signals could be exchanged from the first element of the first device to the first element of the second device via the first optic sub-connection;
- signals could be exchanged from the first element of the second device to the first element of the first device via the second optic sub-connection;
- signals could be exchanged from the second element of the first device to the second element of the second device via the first optic sub-connection;
- signals could be exchanged from the second element of the second device to the second element of the first device via the second optic sub-connection.

Optionally, the first fiber-optic sub-connection is linked to the first device through a multiplexer and is linked to the second device through a demultiplexer, and wherein the second fiber-optic sub-connection is linked to the second device through a multiplexer and is linked to the first device through a demultiplexer.

Optionally, fiber-optic connection is a duplex fiber-optic connection.

Optionally, the networked system respects IEEE 802.1Q and/or IEEE 802.3 and/or IEEE 1588-2008 standards.

The invention also relates to a calibration process of a system as precited, the calibration process comprising the following steps:

- Configure the system in a first configuration so that signals are transmitted by the first fiber-optic sub-connection at the first wavelength and signals are transmitted by the second fiber-optic sub-connection at a second wavelength,
- Monitor the first device and second device to synchronize them by exchanged messages between them and/or by a time protocol,
- Record a roundtrip time of this first configuration,
- Configure the system in a second configuration so that signals are transmitted by the first fiber-optic sub-connection at the second wavelength and signals are transmitted by the second fiber-optic sub-connection at the first wavelength,
- Monitor the first device and second device to synchronize them by exchanged messages between them and/or by a time transfer protocol,
- Record a roundtrip time of this second configuration,
- Calculate at least one value characteristic of an asymmetry of the system on the basis of the roundtrip time of the first configuration and the roundtrip time of the second configuration,
- Calibrate at least one of the first or second device on the basis of this value.

Optionally, the process comprises the additional step of using the same wavelength for the first and second fiber-optic sub-connections after having calibrated at least one of the first or second device on the basis of characteristic of an asymmetry of the networked system.

BRIEF DESCRIPTION OF THE DRAWINGS

Figures 1 and 2 have already been introduced with reference to the description of the prior art.
[Fig. 1] Figure 1 is a White Rabbit network showing a White Rabbit transmitter and a White Rabbit receiver;
[Fig. 2] Figure 2 is the White Rabbit network of figure 1 that a simplified version showing just the fiber-optic round-trip time.
Besides, the invention will be best understood in the light of the following description, in reference to the accompanying figures, among which:
[Fig. 3] Figure 3 is a schematic White Rabbit networked system according to a first embodiment of the invention,
[Fig. 4a] Figure 4a illustrates a first configuration of the networked system represented figure 3;
[Fig. 4b] Figure 4b illustrates a second configuration of the networked system represented figure 3;
[Fig. 5] Figure 5 is a schematic view of one device of the networked system represented figure 3;
[Fig. 6] Figure 6 is a process flow diagram implemented in the networked system represented figure 3;
[Fig. 7] Figure 7 illustrates a first configuration and a second configuration of a schematic White Rabbit networked system according to a second embodiment of the invention; [Fig. 8] Figure 8 is a schematic White Rabbit networked system according to a third embodiment of the invention.

DETAILED DESCRIPTION OF THE INVENTION

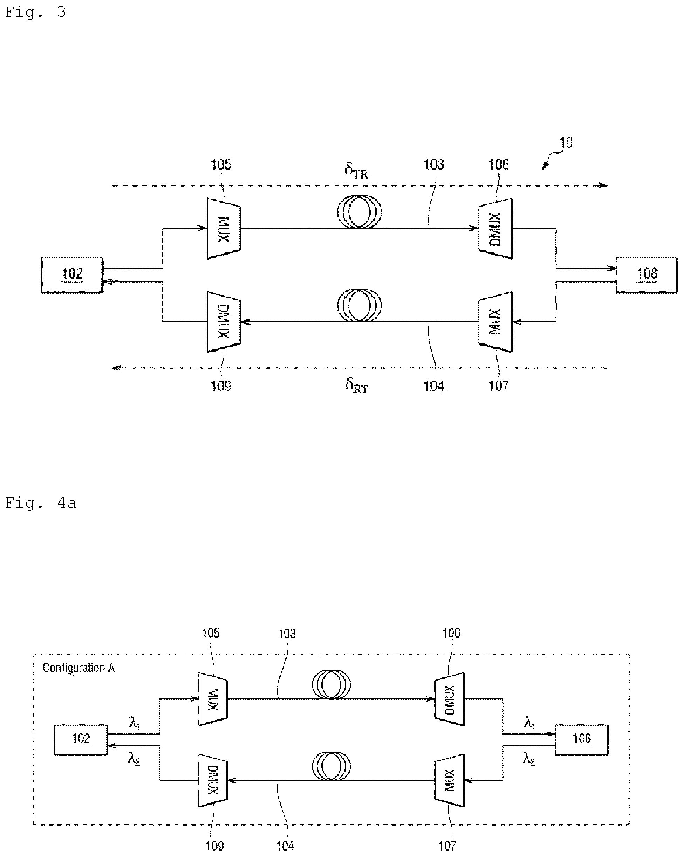

Figure 3 illustrates a networked system 10 according to a first embodiment of the invention. Said system 10 comprises a first device and a second device. Here the first device is only constituted of one element and the second device is only constituted of one element.

In a time protocol, usually, a device is designated as a "time transmitter" and another as a "time receiver".

In the following, the first device will be the time transmitter (called transmitter 102 by the following) and the second device will be the time receiver (called receiver 108 by the following).

*We therefore use here a vocabulary specific to protocol time but it is understood that the receiver can also transmit data to the transmitter and transmitter can receive data from the receiver and/or roles could be reversed.*

The transmitter 102 and/or receiver 108 are non-transitory computer readable medium.

The networked system 1 is conformed to be a White Rabbit networked system. Consequently, the receiver 108 and the transmitter 102 are respectively a White Rabbit receiver and a White Rabbit transmitter adapted for the invention (in particular they here both comprise a switching module that will be described below).

Specifications for such a networked system (and in particular for such a transmitter and receiver) can be found, for example, here: https://white-rabbit.web.cern.ch/

Thus, the networked system 1 is a Bridged Local Area Network with VLANs (IEEE 802.1Q) that uses:

- Ethernet (IEEE 802.3) to interconnect switches and nodes of the networked system 1 (and so to interconnect the transmitter 102 and the receiver 108), and
- Precision Time Protocol (PTP, IEEE 1588-2008) to synchronize switches and nodes of the networked system (and so to interconnect the transmitter and the receiver). Thus, the networked system 1 (and so the receiver 102 and the receptor 108) respect IEEE 802.1Q and/or IEEE 802.3 and/or IEEE 1588-2008 standards.

The transmitter 102 and the receiver 108 are connected to each other via a fiber-optic connection and in particular via a duplex fiber-optic connection. A duplex fiber-optic connection is particularly useful in case of a long distance separated the transmitter 102 and the receiver 108.

Therefore, the fiber-optic connection comprises a forward fiber-optic sub-connection 103 that transmits signals only from the transmitter 102 to the receiver 108 and comprises a reverse fiber-optic sub-connection 104 that transmits signals only from the receiver 108 to the transmitter 102. The forward fiber-optic sub-connection 103 is connected to the transmitter 102 through a first multiplexer 105 and is connected to the receiver 108 through a first demultiplexer 106.

The reverse fiber-optic sub-connection 104 is connected to the receiver 108 through a second multiplexer 107 and is connected to the transmitter 102 through a second demultiplexer 109.

The networked system 1 is a wavelength-division multiplexing (or WDM) system. Thus both the forward fiber-optic sub-connection 103 and the reverse fiber-optic sub-connection 104 are WDM connections.

Therefore, signals of at least two different wavelengths could be exchanged between the transmitter 102 and the receiver 108 onto the forward fiber-optic sub-connection 103 and the reverse fiber-optic sub-connection 104.

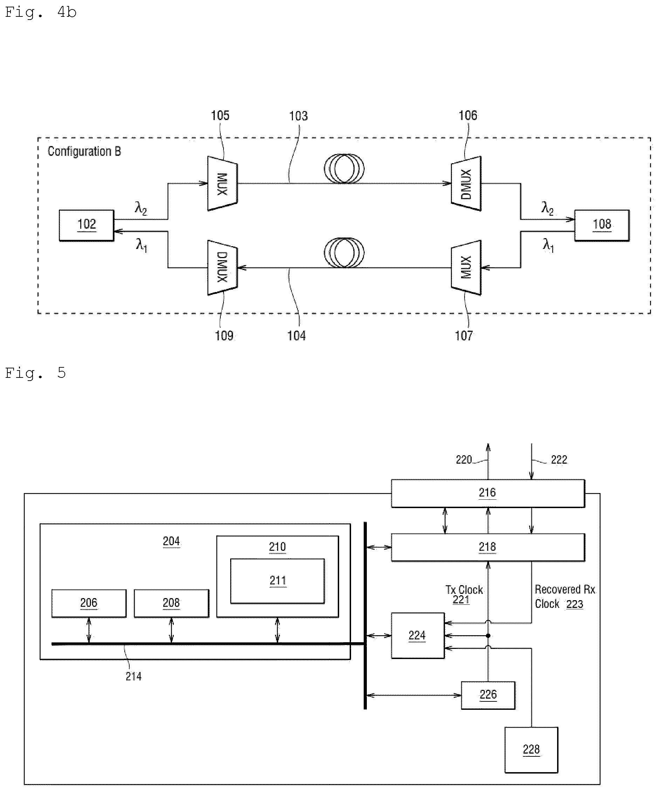

The configuration of the transmitter 102 will be now described in view of figure 5. This description is fully transposable to the receiver 108 in the present case. Therefore, everything that will now be said about the transmitter 102 also applies to the receiver 108.

The transmitter 102 comprises a computing module 204. In the present case, the computing module 204 is a White Rabbit computing module.

The computing module 204 includes at least one processor 206.

The computing module 204 includes at least one memory 210. This memory 210 stores programmed instructions including at least a timing program incorporated in a timing core 211 of the memory 210. Said timing program is a White Rabbit timing program and/or said timing core 211 is a White Rabbit timing core.

The computing module 204 includes at least one communication interface 208.

Processor 206, memory 210 and communication interface 208 are coupled together and to the exterior of the computing module by a communication link 214 like for example a bus. The processor 206 is configured to execute programmed instructions stored in the memory 210 for the any number of functions or other operations illustrated and described. The transmitter also comprises at least one Phase Locked Loop (PLL) module 226.

The transmitter 102 also comprises one reference clock module 228.

The transmitter 102 also comprises at least one Phase Detection module 224.

The transmitter 102 also comprises at least one Ethernet network card 218. For example, said Ethernet network card 218 comprises at least one chip PHY. From there, the Ethernet network card 218 will be named Ethernet PHY 218. Here, the transmitter 102 also comprises at least one switching module. Here, the switching module is a Tunable Wavelength module 216. Said Tunable Wavelength module 216 allows to adjust the wavelength of the transmitted signal 220 and to be adjusted to the wavelength of the received signal 222. To this end, said Tunable Wavelength module 216 comprises for example at least one SFP (Small Form-Factor Pluggable).

Reference clock module 228 is coupled to at least the Phase Detect module 224 by a communication link 214 like for example a bus.

The Phase Detection module 224, the PLL module 226, the Ethernet PHY 218 are coupled together and to the computing module 204 by a communication link 214 like for example a bus.

The Tunable Wavelength module 216 is coupled to the Ethernet PHY 218 by a communication link 214 like for example a bus.

The Tunable Wavelength module 216 is the interface between the transmitter 102 and the remains of the networked system 1. Thus, all signals exchanged between the transmitter 102 and the receiver 108 passes through this Tunable Wavelength module 216.

Signals are then routed to the Ethernet PHY 218 and after that could circulated in the transmitter.

If we go back to figure 3, round-trip time (RTT) between transmitter 102 and receiver 108 is determined as in (1):

$$RTT = delay_{TR} + delay_{RT} \quad (1)$$

with

**delay$_{TR}$** the forward path delay from the transmitter 102 to the receiver 108, and
**delay$_{RT}$** the reverse path delay from the receiver 108 to the transmitter 102.

Each of the path delays in (1) is made up of:

- known components due to hardware of the transmitter 102 and receiver 108 (with the known transmission and reception delays of the transmitter 102 - $\Delta_{TxT}, \Delta_{RxT}$ - and the known transmission and reception delays of the receiver 108 - $\Delta_{RXR}$, $\Delta_{TxR}$), and
- unknown components due to the fiber-optic path i.e. fiber-optic propagation delay from the transmitter 102 to the receiver 108 $\delta_{TR}$ and fiber-optic propagation delay from the receiver 108 to the transmitter 102 $\delta_{RT}$.

Round-trip time (RTT') of packets between transmitter 102 and receiver 108 considering only unknown components could be written :

$$RTT' = \delta_{TR} + \delta_{RT} \quad (4)$$

Thus, the receiver 108 and the transmitter 102 have to been calibrated in order to take into account both known components and unknown components and in particular the fiber-optic delays namely $\delta_{TR}$ for the fiber-optic delay of the forward fiber-optic sub-connection 103 and $\delta_{RT}$ for the fiber-optic delay of the reverse fiber-optic sub-connection 104.

This calibration is in particular based on the relative delay coefficient $\alpha$ between the fiber-optic delays ($\delta_{TR}$, $\delta_{RT}$) that is defined by:

$$\alpha = \frac{\delta_{TR}}{\delta_{RT}} - 1 \quad (5)$$

Each of the fiber-optic delays ($\delta_{TR}$, $\delta_{RT}$) could be defined by:

$$\delta_{TR} = L_{TR} \times \frac{n_{\lambda TR}}{c} \quad (6)$$

$$\delta_{RT} = L_{RT} \times \frac{n_{\lambda RT}}{c} \quad (7)$$

with

L$_{TR}$ the length of the forward fiber-optic sub-connection 103,
L$_{RT}$ the length of the reverse fiber-optic sub-connection 104,
n$_{\lambda TR}$ the index of refraction of a particular wavelength $\lambda$ in the forward fiber-optic sub-connection 103,
n$_{\lambda RT}$ the index of refraction of a particular wavelength $\lambda$ in the reverse fiber-optic sub-connection 104, and c the speed of light in the considered environment of the networked system 1.

By incorporating (6) and (7) into (5), the following equation could be gotten:

$$\alpha = \left(\frac{L_{TR}}{L_{RT}}\right)\left(\frac{n_{\lambda TR}}{n_{\lambda RT}}\right) - 1 \quad (8)$$

The indices of refraction ($n_{\lambda TR}$, $n_{\lambda RT}$) are manufacturer's data or could be determined using well-known experimentation techniques.

By incorporating (6) and (7) into (4), the following equation could also be gotten:

$$RTT' = \left(L_{TR} \times \frac{n_{\lambda TR}}{c}\right) + \left(L_{RT} \times \frac{n_{\lambda RT}}{c}\right) \quad (9)$$

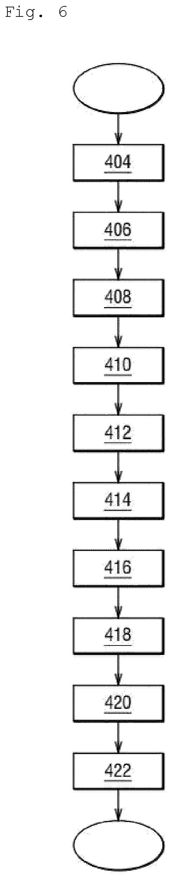

A calibration process will now be described in view of figure 6.

If it is not already the case, the fiber-optic connection between transmitter 102 and receiver 108 is setting up in order to permit at least exchanging time between the transmitter 102 and the receiver 108.

During a first step 404, if known components $\Delta_{TxT}, \Delta_{RXR}, \Delta_{TxR}, \Delta_{RxT}$ are not already stored in the transmitter 102 and/or receiver 108 then these components are calculated using prior art methods. On the basis of these components $\Delta_{TxT}, \Delta_{RxR}, \Delta_{TxR}, \Delta_{RxT}$ corresponding calibration values are estimated and are configured in the timing core 211 of each transmitter 102 and receiver 108.

During a second step 406, timing cores 211 of the transmitter 102 and receiver 108 configure their own tunable wavelength modules 216 (for example through their Ethernet cards). In particular the tunable wavelength module 216 of the transmitter 102 is configured such that the transmit wavelength is set to a first wavelength $\lambda_1$ and the tunable wavelength module 216 of the receiver 108 is configured such that the transmit wavelength is set to a second wavelength $\lambda_2$ that is different than the first wavelength $\lambda_1$.

The configuration of the networked system 1 is then the one illustrated figure 4a: signals circulating via the forward fiber-optic sub-connection 103 use the first wavelength $\lambda_1$ and signals circulating via the reverse fiber-optic sub-connection 104 use the second wavelength $\lambda_2$. This configuration will be now called "configuration A".

Wavelengths $\lambda_1$ and $\lambda_2$ are preferably selected to maximize the differences in wavelength between them.

During a third step 408, timing cores 211 of the transmitter 102 and receiver 108 are configured to operate as a transmitter and receiver, respectively. The timing cores 211 of the transmitter 102 and receiver 108 devices are monitored until they become synchronized to move on to next step 410. This third step 408 could be performed by using a traditional time protocol like the one defined in the White Rabbit project and/or like the precision time protocol.

During a fourth step 410, the "configuration A" fiber-optic round trip time $RTT'_A$ is calculated inside the receiver 108. To this end, phase difference measurements (made in previous third step 408) are read by the timing core 211 of the transmitter 102 from the Phase Detect blocks 224 of the transmitter 102. Then, the PLL 226 of the transmitter 102 generates at least one Tx Clock 221 in the transmitter 102. It will be understood that this clock Tx Clock 221 is based on the reference clock delivered by the reference clock module 228 of the transmitter 102.

This clock Tx Clock 221 is then transmitted to the receiver 108.

In the same way, phase difference measurements (made in previous third step 408) are read by the timing core 211 of the receiver 108 from the Phase Detect blocks 224 of the receiver 108. Then, the PLL 226 of the receiver 108 generates at least one Tx Clock 221. It will be understood that this clock Tx Clock 221 is based on at least one Recovered Rx Clock 223 delivered by the Ethernet PHY 218 of the receiver 108.

This clock Tx Clock 221 is then transmitted to the transmitter 102.

$RTT'_A$ is then calculated in the timing core 211 of the receiver 108 on the basis of:

- said Tx Clock 221 coming from the PLL 226 of the transmitter 102, and
- said Tx Clock 221 coming from the PLL 226 of the receiver 108.

$RTT'_A$ is then recorded in timing core 211 of the receiver 108.

During a fifth step 412, timing cores 211 of the transmitter 102 and receiver 108 configure their own tunable wavelength modules 216 (for example through their Ethernet cards). In particular the tunable wavelength module 216 of the transmitter 102 is configured such that the transmit wavelength is set to the second wavelength $\lambda_2$ and the tunable wavelength module 216 of the receiver 108 is configured such that the transmit wavelength is set to the first wavelength $\lambda_1$. $\lambda_1$ and $\lambda_2$ are then identical to the one of the second step 406 but are inversed considering the fiber-optic sub-connection considered.

The configuration of the networked system 1 is then the one illustrated figure 4b: signals circulating via the forward fiber-optic sub-connection 103 use the second wavelength $\lambda_2$ and signals circulating via the reverse fiber-optic sub-connection 104 use the first wavelength $\lambda_1$. This configuration will be now called "configuration B". During a sixth step 414, timing cores 211 of the transmitter 102 and receiver 108 are configured to operate as a transmitter and receiver, respectively. The timing cores 211 of the transmitter 102 and receiver 108 devices are monitored until they become synchronized to move on to next step 416. This step could be performed by using a traditional time protocol like the one defined in the White Rabbit project and/or like the precision time protocol. During a seventh step 416, the "configuration B" fiber-optic round trip time $RTT'_B$ is calculated inside the receiver 108. To this end, phase difference measurements (made in previous sixth step 414) are read by the timing core 211 of the transmitter 102 from the Phase Detect blocks 224 of the transmitter 102. Then, the PLL 226 of the transmitter 102 generates at least one Tx Clock 220 in the transmitter 102. It will be understood that this clock Tx Clock 221 is based on the reference clock delivered by the reference clock module 228 of the transmitter 102. This clock Tx Clock 221 is then transmitted to the receiver 108.

In the same way, phase difference measurements (made in previous sixth step 414) are read by the timing core 211 of the receiver 108 from the Phase Detect blocks 224 of the receiver 108. Then, the PLL 226 of the receiver 108 generates at least one Tx Clock 221.

It will be understood that this clock Tx Clock 221 is based on the recovered Rx clock 223 delivered by the Ethernet PHY 218 of the receiver 108.

This clock Tx Clock 221 is then transmitted to the transmitter 102.

$RTT'_B$ is then calculated in the timing core 211 of the receiver 108 on the basis of:

- said Tx Clock 221 coming from the PLL 226 of the transmitter 102, and
- said Tx Clock 221 coming from the PLL 226 of the receiver 108.

$RTT'_B$ is then recorded in timing core 211 of the receiver 108.

In an eight step 418, the relative delay coefficient $\alpha$ is calculated using the fiber-optic round trip times $RTT'_A$, $RTT'_B$ recorded in steps fourth step 410 and seventh step 416. This calculation could take place in the transmitter 102 and/or in the receiver 108.

Using the indices of refraction for wavelengths $\lambda_1$ and $\lambda_2$ in (9) generates (10) and (11) for respectively $RTT'_A$ and $RTT'_B$:

$$RTT'_A = \left(L_{TR} \times \frac{n_{\lambda_1}}{c}\right) + \left(L_{RT} \times \frac{n_{\lambda_2}}{c}\right) \tag{10}$$

$$RTT'_B = \left(L_{TR} \times \frac{n_{\lambda_2}}{c}\right) + \left(L_{RT} \times \frac{n_{\lambda_1}}{c}\right) \tag{11}$$

The difference between the fiber-optic round trip times could be written:

$$\Delta RTT'_{AB} = RTT'_A - RTT'_B \tag{12}$$

Thus, if (10) and (11) are incorporated in (12):

$$\Delta RTT'_{AB} = \left(\frac{n_{\lambda_1} - n_{\lambda_2}}{c}\right)(L_{TR} - L_{RT}) \tag{13}$$

The length of the fiber-optic from transmitter 102 to receiver 108, $L_{TR}$, is isolated from (13):

$$L_{TR} = \Delta RTT'_{AB}\left(\frac{c}{n_{\lambda_1} - n_{\lambda_2}}\right) + L_{RT} \tag{14}$$

Using (14) in (10), the length of the fiber-optic from receiver 108 to transmitter 102, $L_{RT}$, is isolated as followed:

$$L_{RT} = \left(RTT'_A - \Delta RTT'_{AB}\left(\frac{n_{\lambda_1}}{n_{\lambda_1} - n_{\lambda_2}}\right)\right)\left(\frac{c}{n_{\lambda_1} + n_{\lambda_2}}\right) \tag{15}$$

As $RTT'_A$ and $\Delta RTT'_{AB}$ are known since seventh step 416, $L_{RT}$ could be calculated. After being calculated, this value $L_{RT}$ is used back in (14) to calculate $L_{TR}$.

These values for $L_{TR}$ and $L_{RT}$ are then used in (8) to calculate the relative delay coefficient $\alpha$.

In a ninth step 420, on the basis of this relative delay coefficient $\alpha$ corresponding calibration value is estimated and is configured in the timing core 211 of each transmitter 102 and receiver 108. This permits to recover the fiber-optic connection asymmetry of the networked system 1 between the receiver 108 and the transmitter 102. During a tenth step 422, timing cores 211 of the transmitter 102 and receiver 108 devices configure their own tunable wavelength modules 216 (for example through their Ethernet cards) so that the same wavelength is preferable used for the forward and reverse fiber-optic sub-connections 103, 104 (this wavelength could be the first wavelength $\lambda_1$ or the second wavelength $\lambda_2$ or another wavelength).

The system can then operate normally.

With this first embodiment, the transmitter 102 and receiver 108 use tunable wavelength modules 216 for the transmission and reception of network timing protocol over the network optic-fiber link using two discrete wavelengths. This permits to calculate asymmetry calibration information for the network optic-fiber link and to calibrate the networked system 1 correspondingly.

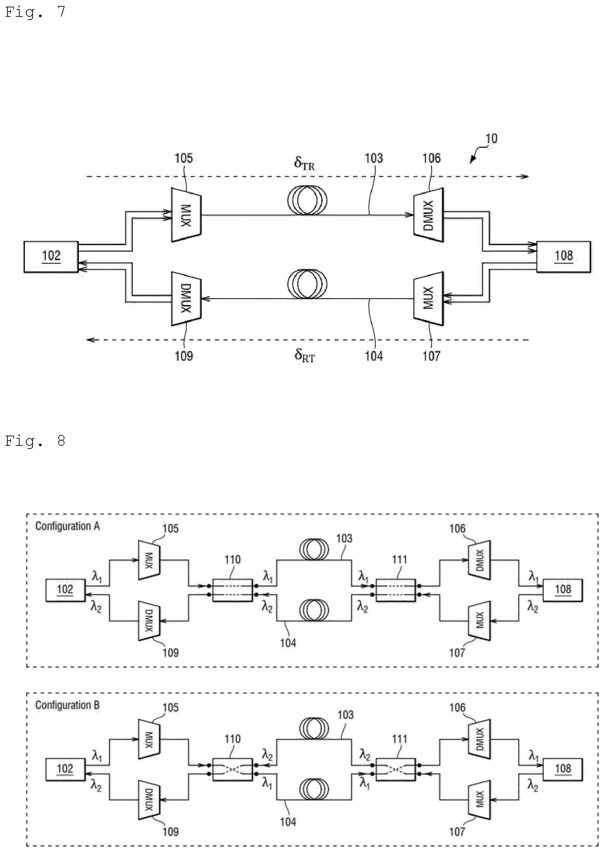

Figure 7 illustrates a system according to a second embodiment of the invention.

Whereas in the first embodiment the first device is a single element and the second device is a single element, in this second embodiment, the first device comprises two elements that run in parallel and the second device comprise two elements that run in parallel.

In the following, the two elements of the first device will be the time transmitters (called transmitters 102 by the following) and the two elements of the second device will be the time receivers (called receiver 108 by the following).

*We therefore use here a vocabulary specific to this protocol but it is understood that the receivers can also transmit data to the transmitters and/or roles could be reversed.*

The transmitters 102 and/or receivers 108 are non-transitory computer readable medium.

As in the first embodiment, the fiber-optic connection comprises a forward fiber-optic sub-connection 103 that transmits signals only from the first device to the second device and comprises a reverse fiber-optic sub-connection 104 that transmits signals only from the second device to the first device.

The forward fiber-optic sub-connection is connected to the first device through a first multiplexer 105 and is connected to the second device through a first demultiplexer 106.

In particular the first multiplexer 105 connects the forward fiber-optic sub-connection 103 to the first transmitter 102 and also to the second transmitter 102.

In particular the first demultiplexer 106 connects the forward fiber-optic sub-connection 103 to the first receiver 108 and also to the second receiver 108.

The reverse fiber-optic sub-connection 104 is connected to the second device through a second multiplexer 107 and is connected to the first device through a second demultiplexer 109.

In particular the second multiplexer 107 connects the reverse fiber-optic sub-connection 104 to the first receiver 108 and also to the second receiver 108.

In particular the second demultiplexer 109 connects the reverse fiber-optic sub-connection 104 to the first transmitter 102 and also to the second transmitter 108.

It is then understood that both transmitters 102 and both receivers 108 used the same fibers in the forward and reverse direction.

In the first embodiment, the transmitter 102 and receiver 108 use tunable wavelength modules 216 for the transmission and reception of network timing protocol over the network optic-fiber link using two discrete wavelengths. In this second embodiment, the transmitter 102 and receiver 108 could use tunable but also fixed wavelength modules 216 for the transmission and reception of network timing protocol over the network optic-fiber link using two discrete wavelengths.

The calibration process implemented in this second embodiment will now be described.

First step 404 and second step 406 are identical to the ones of first embodiment.

In third step 408 timing cores 211 of both the transmitters 102 and both the receivers 108 configure their own tunable wavelength modules 216 if using tunable wavelength modules (for example through their Ethernet cards) . Otherwise, both the transmitters 102 and both the receivers 108 are defined as stated below.

In particular:

- the tunable (or fixed) wavelength module 216 of the first transmitter 102 is configured (or selected) such that the transmit wavelength is set to a first wavelength $\lambda_1$ and the tunable (or fixed) wavelength module 216 of the first receiver 108 is configured (or selected) such that the transmit wavelength is set to a second wavelength $\lambda_2$ that is different than the first wavelength $\lambda_1$; and
- the tunable (or fixed) wavelength module 216 of the second transmitter 102 is configured (or selected) such that the transmit wavelength is set to the second wavelength $\lambda_2$ and the tunable (or fixed) wavelength module 216 of the second receiver 108 is configured (or selected) such that the transmit wavelength is set to the first wavelength $\lambda_1$.

Thus signals circulating via forward fiber-optic sub-connection 103 between first transmitter 102 and first receiver 108 use the first wavelength $\lambda_1$, signals circulating via the forward fiber-optic sub-connection 103 between second transmitter 102 and second receiver 108 use the second wavelength $\lambda_2$, signals circulating via reverse fiber-optic sub-connection 104 between first transmitter 102 and first receiver 108 use the second wavelength $\lambda_2$ and signals circulating via the reverse fiber-optic sub-connection 104 between second receiver 108 and second transmitter 102 use the first wavelength $\lambda_1$.

Wavelengths $\lambda_1$ and $\lambda_2$ are preferably selected to maximize the differences in wavelength between them.

Therefore, with this configuration, the transmit and receive wavelengths for one of the couple transmitter 102/receiver 108 are reversed from the other couple transmitter 102/receiver 108 in each direction.

In this second embodiment, fourth and seventh steps 410 and 416 are the same and may be completed in parallel. The first roundtrip time referred in fourth step 410 is the roundtrip time of the first couple transmitter 102/receiver 108. And the second roundtrip time referred in seventh step 416 is the roundtrip time of the second couple transmitter 102/receiver 108.

Steps 418, 420 and 422 are identical to the ones of the first embodiment.

With this second embodiment, calculation from eighth step 418 can be completed to determine the relative delay coefficient $\alpha$ in each couple of transmitter/receiver (the relative delay coefficient $\alpha$ being the same for the first couple transmitter 102/receiver 108 and the second couple transmitter 102/receiver 108).

In this second embodiment, fifth and sixth steps 412 and 414 are not necessary. Therefore, they are preferably not implemented.

Apart from what has been said above, all that has been said for the first embodiment for the system is also applicable to the present second embodiment.

Figure 8 illustrates a system according to a third embodiment of the invention.

Whereas in the first embodiment, the first device and the second device are associated with tunable wavelength modules 216 for switching the wavelength of signals circulated on the forward sub-connection fiber-optic 103 and the reverse sub-connection fiber-optic 104 during the calibration process, in the third embodiment, the transmitter 102 and the receiver 108 are associated with two controllable optical switches 110, 111 for the implementation of said switching.

As in the first embodiment, the fiber-optic connection comprises a forward fiber-optic sub-connection 103 that transmits signals only from the transmitter 102 to the receiver 108 and comprises a reverse fiber-optic sub-connection 104 that transmits signals only from the receiver 108 to the transmitter 102.

The forward fiber-optic sub-connection 103 is connected to the transmitter 102 through a first port of first optical switch 110 and is connected to the receiver 108 through a first port of the second optical switch 111. In the same way the reverse fiber-optic sub-connection 104 is connected to the transmitter 102 through a second port of the first optical switch 110 and is connected to the receiver 108 through a second port of the second optical switch 111. In particular the first optical switch 110 is connected via a third port to the transmitter 102 through a first multiplexer 105 and via a fourth port to the transmitter 102 through a first demultiplexer 109.

In particular the second optical switch 11 is connected via a third port to the receiver 108 through a second multiplexer 107 and via fourth port to the receiver 108 through a second demultiplexer 106.

Apart from what has been said above, all that has been said for the first embodiment for the system is also applicable to the present third embodiment.

The calibration process implemented in this third embodiment will now be described.

First step 404 and second step 406 are identical to the ones of third embodiment.

In third step 408, both optical switches 110, 111 are in a normal state (corresponding to a "configuration A" of the networked system) i.e. first and third ports of the first optical switch 110 are connected together, second and fourth ports of the first optical switch 110 are connected together, first and fourth ports of the second optical switch 111 are connected together and second and third ports of the second optical switch 111 are connected together.

In particular, the transmitter 102 generates signals at a first wavelength $\lambda_1$: said signals are transmitted to the first multiplexer 105, then to the first optical switch 110, then to the forward fiber-optic sub-connection 103, then to the second optical switch 111, then to the second demultiplexer 106 and then to the receiver 108.

In particular, the receiver 108 generates signals at a second wavelength $\lambda_2$, that is different than the first wavelength $\lambda_1$: said signal is transmitted to the second multiplexer 107 then to the second optical switch 111, then to the reverse fiber-optic sub-connection 104 then to the first optical witch 110 and then to the first demultiplexer 109 and then to the transmitter 102.

Wavelengths $\lambda_1$ and $\lambda_2$ are preferably selected to maximize the differences in wavelength between them.

Steps 410 and 412 are identical to the ones of first embodiment.

In sixth step 414, both optical switches 110, 111 are set into theirs crossed states (corresponding to a "configuration B" of the networked system) i.e. first and fourth ports of the first optical switch 110 are connected together, second and third ports of the first optical switch 110 are connected together, first and third ports of the second optical switch 111 are connected together and second and fourth ports of the second optical switch 111 are connected together.

In particular, the transmitter 102 still generates signal at the first wavelength $\lambda_1$ and said signal is still transmitted to the first multiplexer 105 and then still to the first optical switch 110. But then, this signal circulates via the reverse fiber-optic sub-connection 104 to the second optical switch 111. After that the signal is transmitted again to the second demultiplexer 106 and then to the receiver 108.

In particular, the receiver 108 still generates signals at the second wavelength $\lambda_2$: said signal is still transmitted to the second multiplexer 107 then to the second optical switch 111. But then, this signal circulates via the forward fiber-optic sub-connection 103 to the first optical switch 110. After that the signal is transmitted again to the first demultiplexer 109 and then to the transmitter 102.

Therefore, transmitter 102 and receiver 108 emit at the same wavelength in step 408 and step 414 but the signals travelling on the forward sub-connection 103 and the reverse sub-connection 104 have a different wavelength between step 408 and step 414.

Steps 416, 418, 420 and 422 are identical to the ones of first embodiment.

The invention is not limited to the embodiments, which have just been described, but on the contrary, includes any variants having, with equivalent means, the main features stated above.

Other traditional time protocols than the one defined in the White Rabbit project and/or the precision time protocol could be used in particular for performing the traditional time protocol like for example a Time Transfer protocol over Dynamic Synchronous Transfer Mode (DTM). Whereas the first fiber-optic sub-connection is linked to the first device through a multiplexer and is linked to the second device through a demultiplexer, the first fiber-optic sub-connection could be linked to the first device without a multiplexer and/or could be linked to the second device without a demultiplexer.

Whereas the second fiber-optic sub-connection is linked to the second device through a multiplexer and is linked to the first device through a demultiplexer, the second fiber-optic sub-connection could be linked to the second device without a multiplexer and/or could be linked to the first device without a demultiplexer.

In case of long distance between the first device and the second device, multiplexer and demultiplexer would be preferably used in the described system.

**Claims**

1. Networked system having at least a first device, a second device and a fiber-optic connection for connecting the first device to the second device, the fiber-optic connection having at least a first fiber-optic sub-connection (103), for signals transmission only from the first device to the second device, and at least a second fiber-optic sub-connection (104), for signals transmission only from the second device to the first device, the system being **characterized in that** in a first configuration of the system, signals are transmitted by the first fiber-optic sub-connection at a first wavelength and signals are transmitted by the second fiber-optic sub-connection at a second wavelength, and in a second configuration of the system, signals are transmitted by the first fiber-optic sub-connection at the second wavelength and signals are transmitted by the second fiber-optic sub-connection at the first wavelength.

2. Networked system according to claim 1, comprising at least one first switching module associated to the first device and at least one second switching module associated to the second device, so that in the first configuration of the system, first and second switching devices are in a first state, and in a second configuration of the system, first and second switching devices are in a second state different from the first state.

3. Networked system according to claim 2, wherein at least one of the first switching module and second switching module is a Tunable Wavelength module (216).

4. Networked system according to claim 2, wherein at least one of the first switching module and second switching module is an optical switch (110, 111).

5. Networked system according to claim 4, wherein the first fiber-optic sub-connection (103) is connected to the first device through a first port of a first optical switch (110) and is connected to the second device through a first port of a second optical switch (111) and wherein the second fiber-optic sub-connection (104) is connected to the first device through a second port of the first optical switch (110) and is connected to the second device through the second port of the second optical switch (111).

6. Networked system according to claim 1, wherein the first device comprises two elements that run in parallel and the second device comprise two elements that run in parallel so that:

   - signals could be exchanged from the first element of the first device to the first element of the second device via the first optic sub-connection (103);
   - signals could be exchanged from the first element of the second device to the first element of the first device via the second optic sub-connection (104);
   - signals could be exchanged from the second element of the first device to the second element of the second device via the first optic sub-connection;
   - signals could be exchanged from the second element of the second device to the second element of the first device via the second optic sub-connection.

7. Networked system according to any of claims 1 to 6, wherein the first fiber-optic sub-connection is linked to the first device through a multiplexer (105) and is linked to the second device through a demultiplexer (106), and wherein the second fiber-optic sub-connection is linked to the second device through a multiplexer (107) and is linked to the first device through a demultiplexer (109).

8. Networked system according to any of claims 1 to 7, wherein fiber-optic connection is a duplex fiber-optic connection.

9. Networked system according to any of claims 1 to 8, wherein the networked system respects IEEE 802.1Q and/or IEEE 802.3 and/or IEEE 1588-2008 standards.

10. Calibration process of a networked system according to any preceding claims, comprising the following steps:

   - Configure the networked system in a first configuration so that signals are transmitted by the first fiber-optic sub-connection (103) at the first wavelength and signals are transmitted by the second fiber-optic sub-connection (104) at a second wavelength,
   - Monitor the first device and second device to synchronize them by exchanged messages between them,
   - Record a round-trip time of this first configuration,
   - Configure the networked system in a second configuration so that signals are transmitted by the first fiber-optic sub-connection at the second wavelength and signals are transmitted by the second fiber-optic sub-connection at the first wavelength,
   - Monitor the first device and second device to synchronize them by exchanged messages between them,
   - Record a round-trip time of this second configuration,
   - Calculate at least one value characteristic of an asymmetry of the networked system on the basis of the roundtrip time of the first configuration and the round-trip time of the second configuration,
   - Calibrate at least one of the first or second device on the basis of this value.

11. Calibration process according to claim 10, comprising the additional step of using the same wavelength for the first and second fiber-optic sub-connections (103, 104) after having calibrated at least one of the first or second device on the basis of characteristic of an asymmetry of the networked system.

Fig. 1

PRIOR ART

Fig. 2

PRIOR ART

Fig. 3

Fig. 4a

Fig. 4b

Fig. 5

Fig. 6

```
      ┌─────────┐
      │  404    │
      └─────────┘
           │
      ┌─────────┐
      │  406    │
      └─────────┘
           │
      ┌─────────┐
      │  408    │
      └─────────┘
           │
      ┌─────────┐
      │  410    │
      └─────────┘
           │
      ┌─────────┐
      │  412    │
      └─────────┘
           │
      ┌─────────┐
      │  414    │
      └─────────┘
           │
      ┌─────────┐
      │  416    │
      └─────────┘
           │
      ┌─────────┐
      │  418    │
      └─────────┘
           │
      ┌─────────┐
      │  420    │
      └─────────┘
           │
      ┌─────────┐
      │  422    │
      └─────────┘
```

Fig. 7

Fig. 8

Europäisches
Patentamt
European
Patent Office
Office européen
des brevets

# EUROPEAN SEARCH REPORT

**Application Number**

EP 24 38 2700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/077964 A1 (MANI SANJAY [US]) 28 March 2013 (2013-03-28) | 1-9 | INV. H04B10/073 |
| A | * figure 3 * * paragraphs [0003], [0014], [0034], [0037], [0039], [0045] * ----- | 10,11 | |
| A | DANILUK GRZEGORZ ET AL: "White Rabbit: Sub-Nanosecond Synchronization for Embedded Systems", PTTI 2011 - PROCEEDINGS OF THE 43RD ANNUAL PRECISE TIME AND TIME INTERVAL SYSTEMS AND APPLICATIONS MEETING, THE INSTITUTE OF NAVIGATION, 8551 RIXLEW LANESUITE 360MANASSAS, VA 20109, USA, 17 November 2011 (2011-11-17), pages 45-60, XP056011346, * the whole document * ----- | 1-11 | |
| A | JANSWEIJER PETER ET AL: "Insitu determination of the fiber delay coefficient in time-dissemination networks", 2019 IEEE INTERNATIONAL SYMPOSIUM ON PRECISION CLOCK SYNCHRONIZATION FOR MEASUREMENT, CONTROL, AND COMMUNICATION (ISPCS), IEEE, 22 September 2019 (2019-09-22), pages 1-6, XP033653601, DOI: 10.1109/ISPCS.2019.8886632 [retrieved on 2019-10-28] * the whole document * ----- | 1-11 | **TECHNICAL FIELDS SEARCHED (IPC)** H04B |

The present search report has been drawn up for all claims

| Place of search | Date of completion of the search | Examiner |
|---|---|---|
| Munich | 13 December 2024 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2700

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2024

| Patent document cited in search report | Publication date | Patent family member(s) | | Publication date |
|---|---|---|---|---|
| US 2013077964 A1 | 28-03-2013 | JP | 2013074628 A | 22-04-2013 |
| | | US | 2013077964 A1 | 28-03-2013 |

EPO FORM P0459

For more details about this annex : see Official Journal of the European Patent Office, No. 12/82